# EUROPEAN PATENT SPECIFICATION

(11) **EP 3 304 193 B1**
(45) Date of publication and mention of the grant of the patent: **07.08.2019**
(21) Application number: 16727465.3
(22) Date of filing: 02.06.2016
(51) Int. Cl.: G02F 3/02, G02F 1/01, G02F 1/025

(54) **DEVICES, IN PARTICULAR OPTICAL OR ELECTRO-OPTICAL DEVICES WITH QUANTIZED OPERATION**
VORRICHTUNGEN, INSBESONDERE OPTISCHE ODER ELEKTROOPTISCHE VORRICHTUNGEN, MIT QUANTISIERTEM BETRIEB
DISPOSITIFS, EN PARTICULIER DISPOSITIFS OPTIQUES OU ÉLECTRO-OPTIQUES À OPÉRATION QUANTIFIÉE

(30) Priority: 04.06.2015 EP 15170731
(43) Date of publication of application: 11.04.2018
(73) Proprietor: Karlsruher Institut für Technologie, 76131 Karlsruhe (DE)
(72) Inventor: EMBORAS, Alexandros, 8037 Zurich (CH); LEUTHOLD, Jürg, 8173 Neerach (CH); SCHIMMEL, Thomas, 76131 Karlsruhe (DE)
(74) Representative: Müller-Boré & Partner Patentanwälte PartG mbB
(86) International application number: PCT/EP2016/062476
(87) International publication number: WO 2016/193361

(56) References cited:
- US-A1- 2013 135 982
- US-A1- 2013 201 544
- US-B2- 7 960 217
- C. SCHIRM ET AL.: "A current-driven single-atom memory", NATURE NANOTECHNOLOGY, vol. 8, September 2014 (2014-09), pages 645-648, XP002760740, cited in the application
- RYAN M. ROTH ET AL: "Resonant-plasmon field enhancement from asymmetrically illuminated conical metallic-probe tips", OPTICS EXPRESS, vol. 14, no. 7, 1 January 2006 (2006-01-01), page 2921, XP055294876, ISSN: 2161-2072, DOI: 10.1364/OE.14.002921

## Description

The invention relates to the field of micro-optics and micro-electro-optics and to ways of integrating electronics and photonics, e.g., in computing and/or in communications. The invention relates to corresponding devices and methods. In particular, it relates to ways of achieving a highest density integration in micro-optics and/or micro-electro-optics. The devices and methods find application, e.g., computing and in communications.

From US 2010/0278474 A1, a device with tunable plasmon resonance is known. The disclosed device includes a resonator capable of supporting a plasmon mode, a gain structure arranged to couple energy into the resonator, and a memristive layer arranged to provide an interaction with the plasmon mode. An electric signal applied to the memristive layer can change the interaction and change a resonance frequency of the plasmon mode.

US 2008/0090337 A1 discloses an electrically actuated switch.

US 7,960,217 relates to a gate controlled atomic switch. The disclosures of this document are recited in the preamble of independent claim 1.

The article "Realisation of a single-atom transistor in silicon" by Martin Fuechsle et al., Journal and Proceedings of the Royal Society of New South Wales, vol. 145, nos. 443 & 444, pp. 66-74. ISSN 0035-9173/12/010066-9 describes a realization of a single-atom transistor.

Alexandros Emboras et al. disclose in "Nanoscale Plasmonic Memristor with Optical Readout Functionality", NanoLetters 2013, Vol. 13, p. 6151-6155 a nanoscale resistive random access memory electronic device integrated with a plasmonic waveguide providing the functionality of optical readout. C. Schirm et al. disclose in "A current-driven single-atom memory" published in nature nanotechnology Vol. 8 (Sept. 2014), p.645-648 that a metallic atomic-scale contact can be operated as a reliable and fatigue-resistant two-terminal switch, wherein evidence is provided that the switching process is caused by the reversible rearrangement of single atoms. Owing to its hysteretic behaviour with two distinct states, the two-terminal switch can be used as a non-volatile information storage element.

US 7473982 discloses a NOT circuit using an atomic switch.

K. Terabe et al. disclose in "Quantized conductance atomic switch", letters to nature / Nature vol. 433 Vol. 6 (6 Jan. 2005) p.47-50 a type of nanodevice, referred to as quantized conductance atomic switch (QCAS) which works by controlling the formation and annihilation of an atomic bridge at the crossing point between two electrodes. Wires are spaced approximately 1 nm apart, and one of the two is a solid electrolyte.

An overview over various Nanostructured Resistive Switching Memristors is given in "Review of Nanostructured Resistive Switching Memristor and Its Applications" by S.G. Hu et al. in Nanoscience and Nanotechnology Letters Vol. 6, 729-757, 2014.

"Quantum Conductance in Silicon Oxide Resistive Memory Devices", Scientific Reports 3:2708., by A. Mehonic et al. relates to resistive switching. It is disclosed that the conductance of silicon-rich silica (SiOx) resistive switches is quantised in half-integer multiples of G0.

Furthermore, the following publications are known to the inventors:
US 5561300 related to "Atomic switching devices and logical circuits";
US 5166919 related to "Atomic scale electronic switch";
US 2005/127524 related to "Solid electrolyte switching devices";
US 2011/273920 related to "Switching element and application of the same";
WO 2013/016283 related to "Volatile / non-volatile floating electrode logic/memory cell";
US 4878213 related to "System for recording and readout of information at atomic scale densities and method therefor";
US 2010/272386 related to "Optically and electrically actuable devices";
EP 2214001 related to "Optical amplifying element and probe using the same";
US 2002/179915 related to "Wavelength-tunable light emitting device";
US 2005/250243 related to "Electronic and optoelectronic devices and methods for preparing same";
US 2015/103583 related to "Variable resistance element";
WO 2013/164467 related to "Materials with tunable properties and memory devices and methods of making same using random nanowire or nanotube networks";
JP 2013/077681 related to "Resistance change element and programming method therefor";
JP 2008/000857 related to "Optical nanoswitch";
JP2002/334989 related to "NOT circuit and circuit using the same";
KR 100913024 related to "Molecular mechanical devices with a band gap change activated by an electric field for optical switching applications";
KR 20120132668 related to "Raman assay-based High Throughput multiplex drug screening apparatus";
OHNISHI H. et al.: "QUANTIZED CONDUCTANCE THROUGH INDIVIDUAL
ROWS OF SUSPENDED GOLD ATOMS", Nature (22.10.1998) Vol. 395 p. 780 - 783 (ISSN 0028-0836);
COSTA-KRAEMER J L; et al.: "CONDUCTANCE QUANTIZATION IN NANOWIRES FORMED BETWEEN MICRO AND MACROSCOPIC METALLIC ELECTRODES", PHYSICAL REVIEW, B. CONDENSED MATTER (15.02.199), Vol. 55, p. 5416 - 5424 (ISSN 0163-1829).

One object of the invention is to create a device and a corresponding method for operating a device which make possible an extremely high packaging density.

Another object of the invention is to provide novel optical or electro-optic devices.

Another object of the invention is to provide a possibility of quantized, in particular digital, operation in optical data processing.

Another object of the invention is to provide a possibility of quantized, in particular digital, switching and data processing.

Another object of the invention is to provide quantum operation in the optical and electronic domain at room temperature.

Another object of the invention is create devices having a very low power consumption.

Another object of the invention is to provide a single-atom plasmonic switch, in particular a single-atom plasmonic optical switch.

Another object of the invention is to provide a single-atom memory device.

Another object of the invention is to provide new ways of co-integrating electronics and photonics.

Another object of the invention is to provide a common platform for electronics and photonics, in particular wherein the platform mostly will rely on metals.

Further objects and various advantages emerge from the description and embodiments below.

At least one of these objects is at least partially achieved by devices and methods according to the patent claims.

The inventors discovered that it is possible to reproducibly move in a resonator a single atom or a small cluster of only a few atoms or ions present at a tip in the resonator and to thereby change a resonance frequency for plasmons in the resonator in a well-defined way. The inventors have achieved a quantized operation of an optical switch, in particular a digital operation (two-state operation) of a switch. The inventors envisaged various devices based on the atomic-scale device they contemplated, such as optically and/or electrically controllable optical and/or electrical switches, optically and/or electrically writable optically and/or electrically readable memory devices and optically and/or electrically controllable coupling devices for coupling electronic and photonic signals.

By applying an electrical voltage and/or by means of light, the inventors moved single atoms and clusters in a plasmonic resonator hence and forth between two positions, thus changing the resonance frequency hence and forth between two frequencies. The change in resonator's resonance frequency again changes the interaction with light coupled into the resonator so as to change the amount of light that can be coupled out of the resonator, the latter being quantized changes, e.g., showing an on-off switching behaviour.

The moving or relocating of the atom (or atom cluster) takes place in a vacuum or in a matrix element, in particular wherein diffusion processes in the matrix element take place. The relocating may comprise a dissolution of the atom cluster.

Depending on the choice of materials, the particle(s) relocated can be one or more atoms, one or more ions, or one or more molecules.

More specifically, we describe a device which can (and in many embodiments does) comprise a resonator capable of supporting a plasmon mode, the resonator comprising a tip made of a first material and a vacuum or a matrix element interfacing the tip, the device comprising a material cluster derived from the first material, the material cluster being present at the tip inside the vacuum or matrix element. The device is furthermore structured and arranged to receive in the resonator a setting signal for changing a resonance condition of the plasmon mode by relocating or dissolving or growing the material cluster inside the vacuum or matrix element. Accordingly, the terms "relocation" and "relocating" used in the following can refer to spatial relocation or to growth or to dissolution.

The device can in particular be an optical device or an electro-optical device.

By changing the resonance condition, one or more resonance frequencies of the resonator can be changed. Changes in resonance frequencies can, consequentially, result in amplitude changes; they can result in one or more of (and in particular in all of) amplitude changes, frequency changes and phase changes.

The relocating of the material cluster and its dissolution and growth, respectively, can in particular be a reversible process.

In one embodiment, the material cluster is made of N particles, wherein N is an integer with N ≥ 1. More particularly, each of the particles is an atom of the first material or a molecule of the first material or an ion of the first material.

N can be an integer with N ≤ 100 or with N ≤ 10, in particular with N ≤ 5. With numbers N of particles in a material cluster which are much higher, e.g., 50 or more, a quantized response of the device is unlikely, at least for many configurations.

In a special case, N is equal to one (N = 1). In this case, a quantized operation with two levels can be achievable, thus enabling standard digital operation.

The tip can be, e.g., single crystalline, polycrystalline or amourphous.

The tip can be line-shaped. In particular, the tip may be line shaped defining a straight line. The tip can be, e.g., an edge of a bar-shaped object.

However, the tip can alternatively be point-shaped, e.g., forming a tip of a pyramidal object.

And still in another alternative, the tip is two-dimensional.

In one embodiment, the vacuum or matrix element is capable of transporting and hosting the material cluster and the particles of which the material cluster is comprised, respectively.

In one embodiment, the vacuum or a matrix element is a matrix element made of a matrix material in which the material cluster is diffusive. Thus, the setting signal can cause diffusion of the material cluster within the matrix element.

The matrix material can be a gas, or can be a liquid such as for example a liquid electrolyte. However, in certain instances, it can be advantageous if the matrix material is a solid material. It can be, e.g., a solid electrolyte. This can, e.g., simplify the manufacturing of the device and/or provide a long-term stability of the device.

In one embodiment, the first material is an electrically conductive material, in particular a metal, a semimetal, it can be graphite or a graphene-containing material, it can be a layered material. In particular, the electrically conductive material can comprise at least one of Ag, Au, Cu, Fe, Pb, Pt, Al, Bi, graphite, graphene.

In one embodiment, the matrix element is made of an amorphous material, in particular made of an amorphous semiconducting material, e.g., a-Si.

In one embodiment, the matrix element is made of an electrically insulating or semiconducting material. It can be made of a nanoporous material. In particular, the insulating or semiconducting material comprises one of Si, Ge, GeAs, SiO2, Ta2O5, ZrO2, HfO2, TiO2, WO3, GeOx, GeSx, GeSe, more particularly one of amorphous Si, amorphous Ge, amorphous GaAs, amorphous SiO2, amorphous Ta2O5, amorphous ZrO2, amorphous HfO2, amorphous TiO2, amorphous WO3, amorphous GeOx, amorphous GeSx, amorphous GeSex.

Such materials can, in some instances, make possible a suitable diffusion, e.g., of metal atoms or ion such as Ag, Cu, Co or Ni atoms or ions.

In one embodiment, the device comprises a first coupling element for coupling the setting signal into the resonator. The first coupling element can comprise, e.g., one or more of an opening, an optical waveguide, an electrical lead - wherein an electrical lead can be any electrically conductive structure, e.g., a metallic layer (which may have any suitable shape).

In one embodiment, the setting signal is a voltage signal and thus an electrical signal. In this case, the first coupling element can be, e.g., an electrical lead.

In one embodiment, the setting signal is a light signal (an optical signal). In this case, the first coupling element can be, e.g., an opening (for example for free space operation) or an optical waveguide (for example for optical computing applications) or a plasmonic antenna.

When referring to "light" or to "optical" in the present patent application, we refer, most generally, to electromagnetic radiation. More specifically, we refer to electromagnetic radiation of the microwave, infrared, visible or ultraviolet portion of the electromagnetic spectrum.

In one embodiment, the device is structured and arranged to receive in the resonator a probing signal for probing the resonance condition. The probing signal can be, e.g., a signal to be switched, e.g., in case the device is a switch. The probing signal can be, e.g., a signal for probing and thus determining the state of the device if the device is a memory device.

In particular, the device can comprise a second coupling element for coupling the probing signal into the resonator.

The quantized operation of the device may reflect, e.g., in a discrete number of distinct attenuations for a probing signal such as light intensity attenuations or voltage attenuations or resistance increases. Said discrete number can be, e.g., no more than 10, or no more than 5, e.g., exactly two.

The second coupling element can comprise, e.g., one or more of an opening, an optical waveguide, an electrical lead. For probing with light (optical probing), the second coupling element can comprise, e.g., an opening, an optical waveguide, a plasmonic antenna. For probing with electrical signals (electrical probing), the second coupling element can comprise, e.g., an electrical lead.

Generally, this is like in the case of the first coupling element.

The second coupling element can be identical with the first coupling element. In other embodiments, the second coupling element is different from the first coupling element.

It is possible to provide that both, setting and probing is accomplished by means of light, i.e. optically.

It is possible to provide that the setting is accomplished by means of a voltage, while probing is accomplished by means of light.

It is possible to provide that the setting is accomplished by means of light, while probing is accomplished by means of a voltage.

In one embodiment, the device can be manufactured using CMOS techniques.

In one embodiment, the device comprises a substrate having a main face on which the tip and the vacuum or a matrix element are supported, and the tip may point in a direction parallel to the main face. The first and second electrodes can, in this case, be distanced from each other in a lateral direction (i.e. in a direction parallel to the main face).

In this case, the relocating of the material cluster usually takes place in a direction parallel to the main face (rather than in a direction perpendicular thereto).

In another embodiment, the device comprises a substrate having a main face on which the tip and the vacuum or a matrix element are supported, and the tip may point vertically, i.e. in a direction perpendicular to the main face. The first and second electrodes can, in this case, be distanced from each other in a vertical direction (i.e. perpendicularly to the main face).

In this case, the relocating of the material cluster usually takes place in a direction perpendicular to the main face (rather than in a direction parallel thereto).

In one embodiment, the device comprises an optical waveguide coupled to the resonator for exciting the plasmon mode in the resonator by light guided in the optical waveguide. This way, a coupling of light into the resonator can be facilitated.

The optical waveguide can be arranged, e.g., between the main face and the tip

The optical waveguide can have a waist in a region close to the tip. The optical waveguide can be tapered in said region. It can be, e.g., an adiabatically tapered waveguide.

The optical waveguide can function as the first or the second or both, the first and the second coupling element.

The tip can be comprised in an electrode of the device. It is possible to provide that a second electrode of the device is embodied by the matrix element. In this case, the matrix element can be made of a semiconducting material, a semimetal, or a metal.

However, a second electrode can be provided in addition to the tip and the matrix element.

In one embodiment, the device comprises a first electrode comprising the tip and a second electrode separated from the tip by the vacuum or matrix element, wherein the second electrode is made of a second material which is an electrically conductive material.

In particular, the second material can be a metal, for example the second material can be made of one or more of Ag, Au, Cu, Fe, Pb, Pt, Al, Bi, graphite, graphene.

The matrix element can be made of a semiconducting or of an electrically insulating material.

In one embodiment, the first electrode is made of the first material.

By the relocation of the material cluster, an electrically conductive (in particular galvanic or tunneling) connection between the tip and the second electrode is reversibly established and opened.

As mentioned above, alternatively, the matrix element can function as a second electrode.

In one embodiment, the first electrode comprises a layer of the first material, and the second electrode comprises a layer of the second material, said layers being free from overlap. In particular, said layers can be present in one and the same plane.

Such devices can be particularly well manufacturable, e.g., using CMOS techniques.

In another embodiment, the first electrode comprises a layer of the first material, and the second electrode comprises a layer of the second material, wherein said layers are located in mutually parallel planes, in particular wherein said layers are stacked upon each other.

Such devices can be particularly well manufacturable, e.g., using CMOS techniques.

In one embodiment, the device comprises (in addition to the first and the second electrode) a third electrode arranged distant from the first and second electrodes, in particular wherein the third electrode is made of an electrically conductive material, e.g., of a metal.

Such a third electrode can be used for applying a control signal. E.g., the third electrode can be a gating electrode for biasing a potential of at least one of the other electrodes such as by applying a gating signal as the control signal. But the third electrode can also be used for applying different control signals, for effecting different functionalities.

The device can comprise still further electrodes such as a fourth electrode (in addition to the first, second and third electrodes).

In one embodiment, the matrix element has a layered structure comprising at least two layers of different materials stacked upon each other in a region close to the tip. The tip can be line shaped, and in particular, a line described by the tip may run along a direction of stacking of said at least two layers. E.g., the tip described by the line can be aligned along a direction of stacking of the at least two layers.

In one embodiment, the device is at least one of a switching device and a memory device.

In one embodiment, the device is an electrically controllable optical switch.

In one embodiment, the device is an optically controllable electrical switch.

In one embodiment, the device is an optically controllable optical switch.

In one embodiment, the device is an electrically writable optically readable memory device.

In one embodiment, the device is an optically writable optically readable memory device.

In one embodiment, the device is an optically writable optically readable memory device.

We further decribe a method for operating a device comprising a resonator capable of supporting a plasmon mode, wherein the method comprises
a) applying a setting signal to the resonator, thereby causing a quantized change of a resonance frequency of the resonator by relocating or dissolving or growing a material cluster derived from a first material.

The device can in particular be an optical or an electro-optical device.

The device can be a device of the kind described in the present patent application, e.g., as described above.

In one embodiment, said quantized change effects that the resonance frequency cannot assume an arbitrary one of a continuous range of frequencies, but that there is only a discrete number of distinct frequencies which the resonance frequency can assume.

The change in resonance frequency and a consequential change in plasmonic guiding properties of the resonator is achieved by changing a resonance condition of the resonator. And this is achieved by the relocating of the material cluster.

In one embodiment, by the application of the setting signal, the resonance frequency takes one of M predetermined discrete resonance frequencies, wherein M is an integer with M ≥ 2.

In one embodiment, a number of different possible resonance frequencies is related to a number of particles of which the material cluster is composed, i.e. to the integer N, explained above and below.

In one embodiment, the device comprises a tip at which the material cluster is located. In particular, the material cluster can be derived from a first material, and the tip can be made of the first material.

In one embodiment, the resonator comprises a tip made of the first material and a vacuum or a matrix element interfacing the tip. The vacuum or a matrix element can be as described for the device.

In one embodiment, the method comprises causing a diffusion of the material cluster in the matrix element by the application of the setting signal. Diffusion of the material cluster can more precisely mean diffusion of particles constituting the material cluster.

In one embodiment, the material cluster consists of N particles, wherein N is an integer with N ≥ 1, in particular with N ≤ 100 or N ≤ 10, more particularly with N ≤ 5.

In one embodiment, the N particles are identical (congeneric) particles.

Integer N designates the number of particles of which the material cluster is composed.

In one embodiment, the quantized change of the resonance frequency depends on N.

In one embodiment, the quantized change in the resonance frequency depends on a geometrical arrangement of the N particles.

In one embodiment, the setting signal is a light signal.

In one embodiment, the setting signal is a voltage signal.

In one embodiment, the method comprises
b) applying a probing signal to the resonator and determining a change the probing signal has thereby undergone.

In one embodiment, the probing signal is a light signal.

In one embodiment, the probing signal is a voltage signal.

The invention comprises devices with features of corresponding methods according to the invention, and, vice versa, also methods with features of corresponding devices according to the invention.

The advantages of the devices basically correspond to the advantages of corresponding methods, and, vice versa, the advantages of the methods basically correspond to the advantages of corresponding devices.

Further embodiments and advantages emerge from the dependent claims and the figures.

Below, the invention is described in more detail by means of examples and the included drawings. The figures show:
- Fig. 1: a schematic illustration of a device with integrated waveguide in a perspective view;
- Fig. 2: a cross-section through a device with integrated waveguide;
- Fig. 3: a schematic illustration of a resonator with two electrodes in a first cross-section;
- Fig. 4: a schematic illustration of the resonator of Fig. 3 in a second cross-section;
- Fig. 5: a schematical illustration of a resonator with two electrodes in a first state, in a top view;
- Fig. 6: a schematical illustration of the resonator of Fig. 5 in a second state, in a top view;
- Fig. 7: a scanning electron microscope image of a tip connected to an electrode by a nanofilament;
- Fig. 8: a graph showing a sinusoidal voltage as a setting signal and a resulting rectangular light signal as probing signal, for illustrating a quantized (digital) operation of the device;
- Fig. 9: a graph showing results of a simulation of light transmission showing resonances;
- Fig. 10: a graph showing experimental results of light transmission showing resonances;
- Fig. 11: a current vs. voltage graph showing a typical memristive behaviour;
- Fig. 12: a conductivity vs. voltage graph showing quantized conductance levels;
- Fig. 13: a cross-section through an arrangement comprising devices comprising vertically distanced electrodes.

The described embodiments are meant as examples or for clarifying the invention and shall not limit the invention.

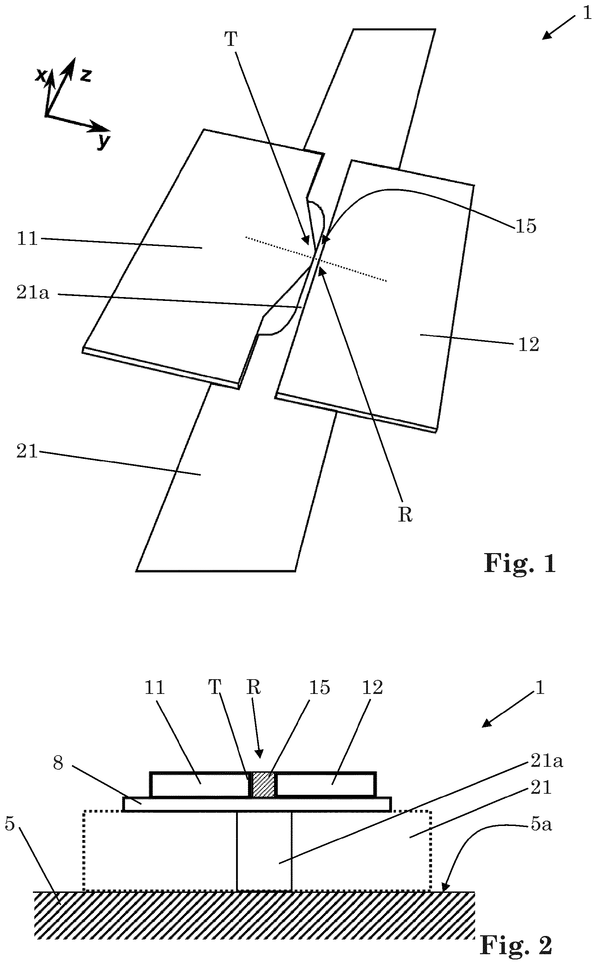

Fig. 1 shows a schematic illustration of a device 1 with integrated waveguide 21 in a perspective view. The device 1 comprises two electrodes 11, 12, electrode 11 comprising a tip T. Tip T is, in the embodiment of Fig. 1, line-shaped.

In a plane below electrodes 11, 12, device 1 comprises an optical waveguide 21 which is tapered, having a waist 21a.

At tip T between the electrodes 11, 12, a vacuum can be present, or there is a matrix element 15 present (not specifically illustrated).

At tip T between the electrodes 11, 12, a resonator R of device 1 is present. Resonator R can support plasmons.

As will be further explained and illustrated below, setting signals can be applied to device 1 and more particularly to resonator 1 which cause the creation or destruction of a nanofilament present at tip T; more generally, a material cluster present at tip T can be relocated, i.e. displaced, by such setting signals, wherein the material cluster can consist of, e.g., a single atom or molecule or ion. The two electrodes 11, 12 can be brought into electrical contact by the material cluster (e.g., by tunneling or by short-circuiting), and the electrical contact (e.g., provided by the nanofilament) can be opened again, by relocating the material cluster, in particular back into its former position. It is also possible to provide that the electrodes 11, 12 are brought into contact by growing the material cluster and that the electrical contact is opened by dissolving the material cluster, e.g., in case the matrix element comprises an electrolyte, e.g., a solid electrolyte.

The electrodes 11, 12 can function as a first coupling element for coupling voltages into resonator R, the voltages functioning as the setting signals.

This way, a resonance condition of resonator R is changed, thus resulting in a change of the resonance frequency of resonator R.

A probing signal such as light can be applied to device 1 and more particularly to resonator R which makes possible to detect the change in resonance frequency of resonator R, e.g., by detecting the amount of light intensity of the probing signal transmitted through resonator R.

Optical waveguide 21 can function as a second coupling device for coupling probing signals (in this case light signals) into resonator R. Waist a enhances the coupling efficiency of light to plasmons thereby excited in resonator R.

Depending on the position of the material cluster at tip T, the amount of light coupled out of resonator R will be higher or lower.

Shape and materials of the resonator R can be selected to result in a resonance frequency coinciding with the frequency of the light coupled into resonator R when the contact is open or, alternatively, when the contact is closed.

Of course, also second electrode 12 can comprise a tip, too, in particular in vicinity of tip T.

Electrode 11 can be made of, e.g., Ag or Cu. The material cluster can thus be, e.g., a single silver ion or a couple of silver ions. Alternatively, electrode 11 can be made of, e.g., Au, Cu, Fe, Pb, Pt, Al, Bi, Graphite, Graphene.

Matrix element 15 can be made of, e.g., amorphous silicon (a-Si). Silver ions can diffuse in a-Si upon application of a voltage or upon light incidence. Alternatively, matrix element 15 can be made of, e.g., Si, Ge, GeAs, SiO2, Ta2O5, ZrO2, HfO2, TiO2, WO3, GeOx, GeSx, GeSex, nanoporous Si.

Devices as illustrated can be manufactured, e.g., using (standard) CMOS processes.

Fig. 2 is a cross-section through a device 1 with integrated an waveguide 21 having a design similar to the design of the device 1 of Fig. 1. The cross-section runs through the resonator R of the device, approximately along a line as indicated in Fig. 1 by the dotted line.

On a surface referred to as main face 5a of a substrate 5 such as, e.g., on a silicon-on-insulator wafer, the waveguide 21 is created, e.g., as a silicon-based tapered waveguide. On waveguide 21, an intermediate layer 8 such as an insulating layer, e.g., a Si3N4 layer, may be deposited. Thereon, the two electrodes 11, 12 are produced, at least electrode 11 having a tip T. Then, matrix element 15 is produced in the space between the electrodes 11, 12.

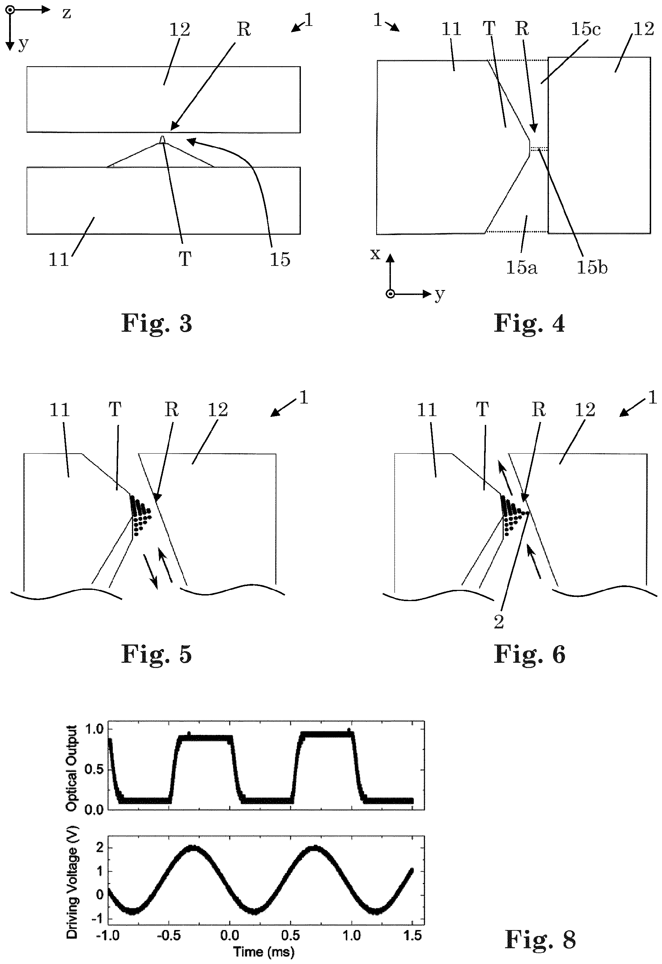

Fig. 3 is a schematic illustration of a resonator R with two electrodes 11, 12 in a first cross-section, and Fig. 4 is a schematic illustration of the resonator R of Fig. 3 in a second cross-section (cf. also Fig. 1 for the coordinates). Both cross-sections pass through tip T.

The resonators R of Figs. 1 and 3 and 4 are similar to each other, but in contrast to the device 1 of Fig. 1, the tip T in Figs. 3, 4 is line shaped in a direction perpendicular to a main face of a substrate on which device 1 is produced (cf. Fig. 2, too). And in case of Figs. 3, 4, matrix element 15 has a layered structure. Matrix element 15 comprises layers 15a, 15b, 15c stacked upon each other in a direction perpendicular to the main face of the substrate, cf. Fig. 4, dotted lines. E.g., layer 15a can be made of a-Si, layer 15b made of oxidized a-Si, and layer 15c made of a-Si.

By means of an interface (or a separate layer such as layer 15b forming two interfaces) close to a line-shaped tip, it can be possible to better control that only a single nanofilament establishes between the electrodes. In other words, the probability of relocating only a single material cluster can be increased. The existence of several electrically parallel nanofilaments can potentially, destroy the quantized operation of the device.

The stacking direction of the layers 15a, 15b, 15c can be aligned parallel to the line described by the line-shaped tip, as illustrated in Fig. 4.

Figs. 5 and 6 are a schematical illustrations in a top view of a resonator R with two electrodes 21, 22 in a first state and in a second state, respectively. In this case, the illustrated tip T is point-shaped.

In the first state (Fig. 5), tip T and electrode 12 are not in mutual electrical contact, whereas in the second state (Fig. 6), an atom or ion has been moved to close the electrical contact between electrodes 11, 12.

As is symbolized by the sharp-tipped arrows, light incident on the resonator is (prevailingly) reflected if the contact is open (Fig. 5) and is (prevailingly) transmitted if the contact is closed (Fig. 6). It is also possible to provide that the light incident on the resonator is (prevailingly) localized at the tip if the contact is open (not specifically illustrated). The transmitted light is generated by exciting plasmons inside the resonator by means of the incident light and exciting the outgoing light by the plasmons. Resonant photon-plasmon coupling in the open or in the closed state can cause particularly strong intensity changes in the transmitted (outgoing) light upon changes in the resonance conditions, cf. also Fig. 8.

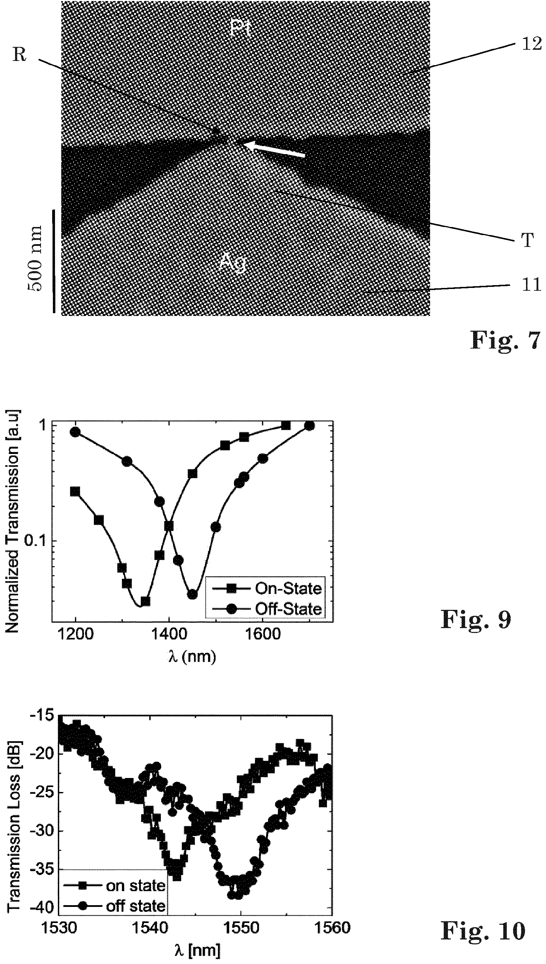

Fig. 7 is a scanning electron microscope image of a tip T connected to an electrode 12 by a nanofilament comprising the material cluster. On the left hand side, the scale is indicated. The white arrow points at the nanofilament.

Fig. 8 is a graph showing a sinusoidal voltage as a setting signal and a resulting rectangular light signal as probing signal, for illustrating a quantized (here: digital) operation of the device. The wavelength of the light is chosen to closely match a resonance condition of the resonator in the opened state. An intensity ratio of 10 dB between the transmitted light intensity in the on- and in the off-state, respectively, has been achieved.

Fig. 9 is a graph showing results of a simulation of light transmission showing resonances. Depending on the state (open; closed) of the contact between the electrodes, the resonator has two distinctly different resonance frequencies.

Fig. 10 is a graph showing experimental results of light transmission showing resonances of a resonator in open state and in closed state, respectively.

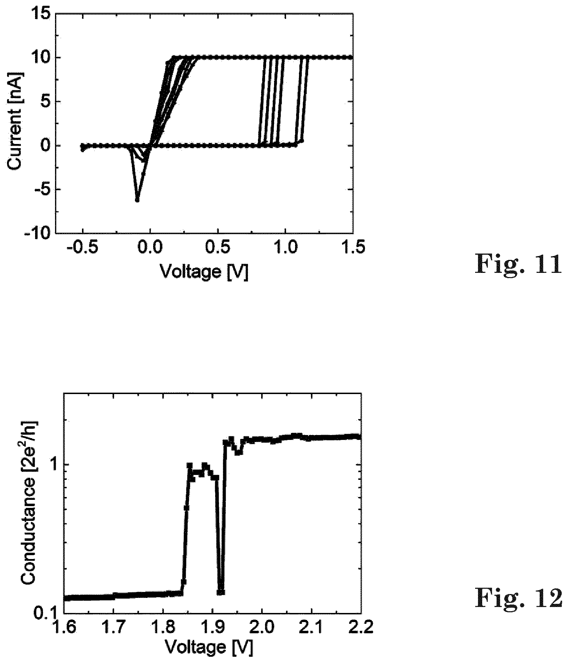

Fig. 11 is a current vs. voltage graph showing a typical memristive behaviour of the device when the voltage is swept from -0.5V to 1.5 V. The switching threshold voltage is around 1V. A compliance current has been set to 10 nA in order to avoid heating and melting of the electrodes. This means that the device can switch with as little as 10 nW of power.

Fig. 12 is a conductivity vs. voltage graph showing quantized conductance levels achieved in a device, thus proving quantized behaviour. Operation of the device with a contact at the atomic level is thereby proved, since conductance quantization is observed during the switching process. In experiments, the atomic scale dimensions of the device are revealed by measuring quantum effects in the conductivity in current-voltage sweep. It is worth noting that at the beginning, the device is switched on with a compliance current of 100 nA. Sharp transitions with a clear and well-defined conductance plateau were observed, strongly resembling those observed in atomic transistors. Such conductance quantization with values of fractions of the value of the fundamental quantum conductance unit is a convincing experimental evidence that two stable metallic contacts on atomic scale are formed.

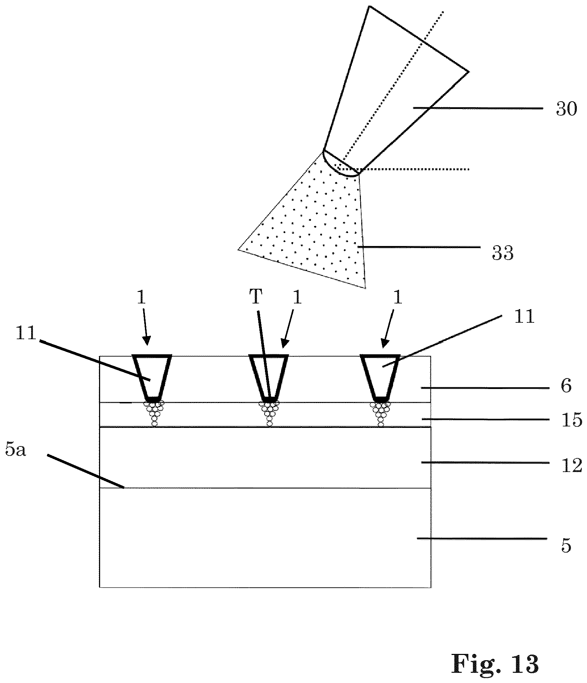

Fig. 13 shows a schematic illustration in a cross-sectional view of an arrangement including devices 1 (three are shown in the figure) having electrodes 11 and 12 which are embodied as mutually parallel electrically conductive layers, e.g., metallic layers. The electrodes 11, 12 are stacked upon each other with the matrix element 15 in between.

As illustrated in Fig. 13, the arrangement of devices 1 can include a multitude of devices 1 distributed in a plane lateral plane, i.e. in a plane parallel to the main face 5a of substrate 5.

In the embodiment of Fig. 13, the devices 1 share a common electrode 12; and the electrodes 11 are distanced from each other and distributed in a lateral plane. And furthermore, the devices 1 share a common matrix element 15.

In the embodiment of Fig. 13, the electrodes 11 of the devices 1 are present in a further substrate 6 which is laterally aligned.

The layer stack (including common electrode 12, the further substrate 6 and thus electrodes 11, 12, and the matrix element 15) is located on main face 5a of substrate 5. Main face 5a is arranged perpendicular to the drawing plane of Fig. 13.

Furthermore, in Fig. 13, a light source 30 emitting light 33 is shown in order to illustrate the possibility to use light as a probing signal and/or as a setting signal.

The inventors determined that a resonator size of 25 nm x 25 nm x 25 nm or less and even of 5 nm x 5 nm x 5 nm or less can be sufficient for operating the device.

While most embodiments above have been described in the fashion that electric signals are used as setting signals and thus for switching or for writing, and light (optical signal) is used for probing and thus for reading the resonator state or as signals to be switched, the described devices can also be used differently, e.g., vice versa, i.e. such that light is used for setting (and thus for causing the relocation of the material cluster) and electrical signals are used for probing, e.g., via a resistance between the electrodes. Or the device can be operated purely optically such that both, setting and probing is accomplished optically, i.e. by using light only.

## Claims

1. A device (1) being usable as an optically and/or electrically controllable switch, an optically and/or electrically writable and readable memory device and/or an electro-optical coupling device, the device (1) comprising:
- a resonator (R) capable of supporting a plasmon mode,
- a first electrode (11) comprising a tip (T), wherein the tip (T) is comprised in the resonator (R) and made of a first material,
- a matrix element (15) interfacing the tip (T), and
- a material cluster made of N particles, wherein N is an integer with N ≥ 1, each of the particles being an atom of the first material or a molecule of the first material or an ion of the first material, the material cluster being present at the tip (1) inside the matrix element (15),
wherein the device (1) is structured and arranged to receive in the resonator (R) a setting signal for changing a resonance condition of the plasmon mode by relocating or dissolving or growing the material cluster inside the matrix element (15), **characterized in that**
the device (1) is structured and arranged to receive in the resonator (R) a probing signal for probing the resonance condition.

2. The device (1) according to claim 1, wherein N ≤ 10 or N ≤ 5 or N = 1.

3. The device (1) according to claim 1 or 2, wherein the tip (T) is line-shaped or point-shaped.

4. The device (1) according to one of claims 1 to 3,
wherein the matrix element is a matrix element made of a matrix material in which the material cluster is diffusive, in particular wherein the matrix material is a solid material, more particularly a solid electrolyte, or a liquid material, more particularly a liquid electrolyte, and/or
wherein the first material is an electrically conductive material, in particular a metal, and the matrix element is made of an electrically insulating or semiconducting material, in particular wherein the electrically conductive material comprises at least one of Ag, Au, Cu, Fe, Pb, Pt, Al, Bi, graphite, graphene and/or wherein the insulating or semiconducting material comprises at least one of Si, Ge, GeAs, SiO2, Ta2O5, ZrO2, HfO2, TiO2, WO3, GeOx, GeSx, GeSex, more particularly one of amorphous Si, amorphous Ge, amorphous GaAs, amorphous SiO2, amorphous Ta2O5, amorphous ZrO2, amorphous HfO2, amorphous TiO2, amorphous WO3, amorphous GeOx, amorphous GeSx, amorphous GeSex.

5. The device (1) according to one of claims 1 to 4,
wherein the device (1) comprises a first coupling element for coupling the setting signal into the resonator (R), in particular wherein the first coupling element comprises one or more of an opening, an optical waveguide, an electrical lead, in particular wherein the electrical lead is a metallic layer, and/or
wherein the device (1) comprises a second coupling element for coupling the probing signal into the resonator, in particular wherein the second coupling element comprises one or more of an opening, an optical waveguide, an electrical lead, and/or
wherein the device (1) comprises a substrate (5) having a main face (5a) on which the tip (T) and the matrix element are supported, the tip (T) pointing in a direction parallel to the main face (5a), and in particular wherein the device (1) comprises an optical waveguide (21) coupled to the resonator (R) for exciting the plasmon mode in the resonator (R) by light guided in the optical waveguide (21), the optical waveguide (21) being arranged between the main face (5a) and the tip (T), in particular wherein the optical waveguide (21) has a waist (21a) in a region close to the tip (T).

6. The device (1) according to any one of the preceding claims, comprising a second electrode (12) separated from the tip (T) by the matrix element, wherein the second electrode (12) is made of a second material which is an electrically conductive material, in particular wherein the second material is a metal, for example the second material being made of one or more of Ag, Au, Cu, Fe, Pb, Pt, Al, Bi, graphite, graphene.

7. The device (1) according to claim 6,
wherein the first electrode (11) comprises a layer of the first material, and the second electrode (12) comprises a layer of the second material, said layers being free from overlap, in particular wherein said layers are present in one and the same plane, or
wherein the first electrode (11) comprises a layer of the first material, and the second electrode (12) comprises a layer of the second material, wherein said layers are located in mutually parallel planes, in particular wherein said layers are stacked upon each other.

8. The device according to one of claims 6 and 7, further comprising a third electrode arranged distant from the first and second electrodes (11, 12), in particular wherein the third electrode is made of an electrically conductive material, e.g., of a metal.

9. The device according to any one of the preceding claims, wherein the matrix element has a layered structure comprising at least two layers of different materials stacked upon each other in a region close to the tip (T), wherein the tip (T) is line shaped, and a line described by the tip (T) runs along a direction of stacking of said at least two layers.

10. A method for operating an optical or electro-optical device (1), the device (1) being a switching device, a memory device or an electro-optical coupling device and
**characterized in that**
the device (1) comprises a resonator (R) capable of supporting a plasmon mode, the method comprising:
a) applying a setting signal to the resonator (R), thereby causing a quantized change of a resonance frequency of the resonator (R) by relocating or dissolving or growing a material cluster, and
b) applying a probing signal to the resonator (R) and determining a change the probing signal has thereby undergone.

11. The method according to claim 10, comprising causing a diffusion of the material cluster in a matrix element of the device (1) by the application of the setting signal.

12. The method according to claim 10 or 11, wherein the material cluster consists of N particles, wherein N is an integer with N ≥ 1, in particular with N ≤ 100, more particularly with N ≤ 5, and wherein the quantized change of the resonance frequency depends on N.

13. The method according to one of claims 10 to 12,
wherein the setting signal is a light signal, in particular a microwave signal or an infrared signal or a signal in the visible portion of the electromagnetic spectrum or an ultraviolet signal, or
wherein the setting signal is a voltage signal.

14. The method according to any one of claims 10 to 13,
wherein the probing signal is a light signal, or
wherein the probing signal is a voltage signal.

15. The method according to any one of claims 10 to 14, wherein the device (1) comprises a first electrode (11) and a second electrode (12), wherein by applying the setting signal, an electrical conductivity between the first and the second electrode is changed, and wherein in particular the change in the electrical conductivity is quantized.

## Patentansprüche

1. Eine Vorrichtung (1), die verwendbar ist als optisch und/oder elektrisch steuerbarer Schalter, als optisch und/oder elektrisch beschreib- und lesbare Speichervorrichtung und/oder als elektrooptische Kopplungsvorrichtung, wobei die Vorrichtung (1) Folgendes umfasst:
- einen Resonator (R), der in der Lage ist, einen Plasmon-Modus zu unterstützen,
- eine erste Elektrode (11), die eine Spitze (T) umfasst, wobei die Spitze (T) im Resonator (R) enthalten ist und aus einem ersten Material hergestellt ist,
- ein Matrixelement (15), das die Spitze (T) koppelt, und
- einen Materialcluster aus N-Partikeln, wobei N eine ganze Zahl mit N ≥ 1 ist, wobei jedes der Partikel ein Atom des ersten Materials oder ein Molekül des ersten Materials oder ein Ion des ersten Materials ist, wobei der Materialcluster an der Spitze (1) innerhalb des Matrixelements (15) vorhanden ist,
wobei die Vorrichtung (1) strukturiert und angeordnet ist, um im Resonator (R) ein Einstellsignal zu empfangen zum Ändern eines Resonanzzustandes des Plasmon-Modus' durch Verschieben oder Auflösen oder Wachsen des Materialclusters innerhalb des Matrixelements (15),
**dadurch gekennzeichnet, dass**
die Vorrichtung (1) strukturiert und angeordnet ist, um im Resonator (R) ein Untersuchungssignal zu empfangen, um die Resonanzbedingung zu untersuchen.

2. Die Vorrichtung (1) nach Anspruch 1, wobei N ≤ 10 oder N ≤ 5 oder N = 1.

3. Die Vorrichtung (1) nach Anspruch 1 oder 2, wobei die Spitze {T) linienförmig oder punktförmig ist.

4. Die Vorrichtung (1) nach einem der Ansprüche 1 bis 3,
wobei das Matrixelement ein Matrixelement aus einem Matrixmaterial ist, in dem der Materialcluster diffusiv ist, insbesondere wobei das Matrixmaterial ein Feststoff, insbesondere ein Festelektrolyt, oder ein Flüssigmaterial, insbesondere ein Flüssigelektrolyt, ist, und/oder
wobei das erste Material ein elektrisch leitfähiges Material, insbesondere ein Metall, ist und das Matrixelement aus einem elektrisch isolierenden oder halbleitenden Material hergestellt ist, insbesondere wobei das elektrisch leitfähige Material mindestens eines der Folgenden umfasst: Ag, Au, Cu, Fe, Pb, Pt, Al, Bi, Graphit, Graphen, und/oder wobei das isolierende oder halbleitende Material mindestens eines der Folgenden umfasst: Si, Ge, GeAs, SiO2, Ta2O5, ZrO2, HfO2, TiO2, WO3, GeOx, GeSx, GeSex, und insbesondere eines der Folgenden umfasst: amorphes Si, amorphes Ge, amorphes GaAs, amorphes SiO2, amorphes Ta2O5, amorphes ZrO2, amorphes HfO2, amorphes TiO2, amorphes WO3, amorphes GeOx, amorphes GeSx, amorphes GeSex.

5. Die Vorrichtung (1) nach einem der Ansprüche 1 bis 4,
wobei die Vorrichtung (1) ein erstes Kopplungselement zum Koppeln des Einstellsignals in den Resonator (R) umfasst, insbesondere wobei das erste Kopplungselement eine oder mehrere der Folgenden umfasst: eine Öffnung, eine Lichtwellenleiter, einer elektrischen Leitung, insbesondere wobei die elektrische Leitung eine Metallschicht ist, und/oder
wobei die Vorrichtung (1) ein zweites Kopplungselement zum Koppeln des Untersuchungssignals in den Resonator umfasst, insbesondere wobei das zweite Kopplungselement eine oder mehrere der Folgenden umfasst: eine Öffnung, einen Lichtwellenleiter, eine elektrische Leitung und/oder
wobei die Vorrichtung (1) ein Substrat (5) umfasst, das eine Hauptfläche (5a) aufweist, auf der die Spitze (T) und das Matrixelement getragen werden, wobei die Spitze (T) in eine Richtung parallel zur Hauptfläche (5a) zeigt, und insbesondere wobei die Vorrichtung (1) einen mit dem Resonator (R) gekoppelten Lichtwellenleiter (21) umfasst, um durch im Lichtwellenleiter (21) geführtes Licht den Plasmamodus im Resonator (R) anzuregen, wobei der Lichtwellenleiter (21) zwischen der Hauptfläche (5a) und der Spitze (T) angeordnet ist, insbesondere wobei der Lichtwellenleiter (21) eine Taille (*waist*) (21a) in einem Bereich nahe der Spitze (T) aufweist.

6. Die Vorrichtung (1) nach irgendeinem der vorhergehenden Ansprüche, die eine zweite Elektrode (12) umfasst, die von der Spitze (T) durch das Matrixelement getrennt ist, wobei die zweite Elektrode (12) aus einem zweiten Material hergestellt ist, das ein elektrisch leitfähiges Material ist, insbesondere wobei das zweite Material ein Metall ist, wobei beispielsweise das zweite Material aus einem oder mehreren der Folgenden besteht: Ag, Au, Cu, Fe, Pb, Pt, Al, Bi, Graphit, Graphen.

7. Die Vorrichtung (1) nach Anspruch 6,
wobei die erste Elektrode (11) eine Schicht aus dem ersten Material und die zweite Elektrode (12) eine Schicht aus dem zweiten Material umfasst, wobei die Schichten überlappungsfrei sind, insbesondere wobei die genannten Schichten in ein und derselben Ebene vorhanden sind, oder
wobei die erste Elektrode (11) eine Schicht aus dem ersten Material umfasst, und die zweite Elektrode (12) eine Schicht aus dem zweiten Material umfasst, wobei die genannten Schichten in zueinander parallelen Ebenen angeordnet sind, insbesondere wobei die genannten Schichten aufeinander gestapelt sind.

8. Die Vorrichtung nach einem der Ansprüche 6 und 7, die ferner eine dritte Elektrode umfasst, die entfernt von der ersten und zweiten Elektrode (11, 12) angeordnet ist, insbesondere wobei die dritte Elektrode aus einem elektrisch leitfähigen Material, z.B. einem Metall, hergestellt ist.

9. Die Vorrichtung nach irgendeinem der vorhergehenden Ansprüche, wobei das Matrixelement eine Schichtstruktur aufweist, die mindestens zwei Schichten aus verschiedenen Materialien umfasst, die in einem Bereich nahe der Spitze (T) aufeinander gestapelt sind, wobei die Spitze (T) linienförmig ist und eine durch die Spitze (T) beschriebene Linie entlang einer Stapelrichtung der genannten mindestens zwei Schichten verläuft.

10. Ein Verfahren zum Betreiben einer optischen oder elektrooptischen Vorrichtung (1), wobei die Vorrichtung (1) eine Schaltvorrichtung, eine Speichervorrichtung oder eine elektrooptische Kopplungsvorrichtung ist und
**dadurch gekennzeichnet ist, dass**
die Vorrichtung (1) einen Resonator (R) umfasst, der in den Lage ist, einen Plasmon-Modus zu unterstützen, wobei das Verfahren Folgendes umfasst:
a) Anlegen eines Einstellsignals an den Resonator (R), wodurch eine quantisierte Änderung einer Resonanzfrequenz des Resonators (R) durch Verschieben oder Auflösen oder Wachsen eines Materialclusters bewirkt wird, und
b) Anlegen eines Untersuchungssignals an den Resonator (R) und Bestimmen einer Änderung, die das Untersuchungssignal dadurch erfahren hat.

11. Das Verfahren nach Anspruch 10, umfassend das Bewirken einer Diffusion des Materialclusters in einem Matrixelement der Vorrichtung (1) durch Anlegen des Einstellsignals.

12. Das Verfahren nach Anspruch 10 oder 11, wobei der Materialcluster aus N Partikeln besteht, wobei N eine ganze Zahl ist mit N ≥ 1, insbesondere mit N ≤ 100, insbesondere mit N ≤ 5, und wobei die quantisierte Änderung der Resonanzfrequenz von N abhängt.

13. Das Verfahren nach einem der Ansprüche 10 bis 12,
wobei das Einstellsignal ein Lichtsignal ist, insbesondere ein Mikrowellensignal oder ein Infrarotsignal oder ein Signal im sichtbaren Bereich des elektromagnetischen Spektrums oder ein Ultraviolettsignal, oder
wobei das Einstellsignal ein Spannungssignal ist.

14. Das Verfahren nach irgendeinem der Ansprüche 10 bis 13,
wobei das Untersuchungssignal ein Lichtsignal ist, oder
wobei das Untersuchungssignal ein Spannungssignal ist.

15. Das Verfahren nach irgendeinem der Ansprüche 10 bis 14, wobei die Vorrichtung (1) eine erste Elektrode (11) und eine zweite Elektrode (12) umfasst, wobei durch Anlegen des Einstellsignals eine elektrische Leitfähigkeit zwischen der ersten und der zweiten Elektrode verändert wird, und wobei insbesondere die Änderung der elektrischen Leitfähigkeit quantisiert ist.

## Revendications

1. Un dispositif (1) pouvant être utilisé comme commutateur à commande optique et/ou électrique, dispositif de mémoire à écriture et lecture optique et/ou électrique et/ou dispositif de couplage électro-optique, le dispositif (1) comprenant :
- un résonateur (R) capable de soutenir un mode plasmonique,
- une première électrode (11) comprenant une pointe (T), sachant que la pointe (T) est comprise dans le résonateur (R) et constituée d'un premier matériau,
- un élément matrice (15) interfaçant la pointe (T), et
- un *cluster* de matériau constitué de N particules, sachant que N est un nombre entier avec N ≥ 1, chacune des particules étant un atome du premier matériau ou une molécule du premier matériau ou un ion du premier matériau, le *cluster* de matériau étant présent à la pointe (T) à l'intérieur de l'élément matrice (15), sachant que le dispositif (1) est structuré et agencé pour recevoir dans le résonateur (R) un signal de réglage pour modifier un état de résonance du mode plasmonique en déplaçant ou en dissolvant ou en faisant croître le *cluster* de matériau à l'intérieur de l'élément matrice (15),
**caractérisé en ce que**
le dispositif (1) est structuré et agencé pour recevoir dans le résonateur (R) un signal de sondage pour sonder la condition de résonance.

2. Le dispositif (1) d'après la revendication 1, sachant que N ≤ 10 ou N ≤ 5 ou N = 1.

3. Le dispositif (1) d'après la revendication 1 ou 2, sachant que la pointe (T) est en forme de ligne ou de point.

4. Le dispositif (1) d'après l'une des revendications de 1 à 3,
sachant que l'élément matrice est un élément matrice constitué d'un matériau de matrice dans lequel le *cluster* de matériau est diffusif, notamment sachant que le matériau de matrice est un matériau solide, plus spécifiquement un électrolyte solide, ou un matériau liquide, plus spécifiquement un électrolyte liquide, et/ou
sachant que le premier matériau est un matériau électriquement conducteur, notamment un métal, et que l'élément matrice est constitué d'un matériau électriquement isolant ou semi-conducteur, notamment sachant que le matériau électriquement conducteur comprend au moins l'un parmi les suivants : Ag, Au, Cu, Fe, Pb, Pt, Al, Bi, graphite, graphène et/ou sachant que le matériau isolant ou semi-conducteur comprend au moins l'un parmi les suivants Si, Ge, GeAs, SiO2, Ta2O5, ZrO2, HfO2, TiO2, WO3, GeOx, GeSx, GeSex, plus spécifiquement l'un parmi les suivants : Si amorphe, Ge amorphe, GaAs amorphe, SiO2 amorphe, Ta2O5 amorphe, ZrO2 amorphe, HfO2 amorphe, TiO2 amorphe, WO3 amorphe, GeOx amorphe, GeSx amorphe, GeSex amorphe.

5. Le dispositif (1) d'après l'une des revendications de 1 à 4,
sachant que le dispositif (1) comprend un premier élément de couplage pour coupler le signal de réglage dans le résonateur (R), notamment sachant que le premier élément de couplage comprend une ou plusieurs des suivants : une ouverture, un guide d'ondes optiques, un conducteur électrique, notamment sachant que le conducteur électrique est une couche métallique, et/ou
sachant que le dispositif (1) comprend un deuxième élément de couplage pour coupler le signal de sondage dans le résonateur, notamment sachant que le deuxième élément de couplage comprend une ou plusieurs des suivants : une ouverture, un guide d'ondes optiques, un conducteur électrique, et/ou
sachant que le dispositif (1) comprend un substrat (S) présentant une face principale (5a) sur laquelle la pointe (T) et l'élément matrice sont supportés, la pointe (T) pointant dans une direction parallèle à la face principale (5a), et notamment sachant que le dispositif (1) comprend un guide d'ondes optiques (21) couplé au résonateur (R) pour exciter le mode plasmonique dans le résonateur (R) par de la lumière guidée dans le guide d'ondes optiques (21), le guide d'ondes optiques (21) étant disposé entre la face principale (5a) et la pointe (T), notamment sachant que le guide d'ondes optiques (21) possède une taille (*waist*) (21a) dans une région proche de la pointe (T).

6. Le dispositif (1) d'après l'une quelconque des revendications précédentes, comprenant une deuxième électrode (12) séparée de la pointe (T) par l'élément matrice, sachant que la deuxième électrode (12) est constituée d'un deuxième matériau qui est un matériau électriquement conducteur, notamment sachant que le deuxième matériau est un métal, le deuxième matériau étant par exemple constitué d'un ou de plusieurs parmi les suivants : Ag, Au, Cu, Fe, Pb, Pt, Al, Bi, graphite, graphène.

7. Le dispositif (1) d'après la revendication 6,
sachant que la première électrode (11) comprend une couche du premier matériau, et que la deuxième électrode (12) comprend une couche du deuxième matériau, lesdites couches étant exemptes de chevauchement, notamment sachant que lesdites couches sont présentes dans un seul et même plan, ou
sachant que la première électrode (11) comprend une couche du premier matériau, et que la deuxième électrode (12) comprend une couche du deuxième matériau, sachant que lesdites couches sont situées dans des plans mutuellement parallèles, notamment sachant que lesdites couches sont empilées les unes sur les autres.

8. Le dispositif d'après l'une des revendications 6 et 7, comprenant en outre une troisième électrode agencée à distance des électrodes première et deuxième (11, 12), notamment sachant que la troisième électrode est réalisée en un matériau électriquement conducteur, par exemple en un métal.

9. Le dispositif d'après l'une quelconque des revendications précédentes, sachant que l'élément matrice présente une structure en couches comprenant au moins deux couches de matériaux différents empilées l'une sur l'autre dans une région proche de la pointe (T), sachant que la pointe (T) est en forme de ligne, et qu'une ligne décrite parla pointe (T) suit une direction d'empilement desdites au moins deux couches.

10. Un procédé d'exploitation d'un dispositif optique ou électro-optique (1), le dispositif (1) étant un dispositif de commutation, un dispositif de mémoire ou un dispositif de couplage électro-optique et
**caractérisé en ce que**
le dispositif (1) comprend un résonateur (R) capable de soutenir un mode plasmonique, le procédé comprenant le fait de :
a) appliquer un signal de réglage au résonateur (R), provoquant ainsi une variation quantifiée d'une fréquence de résonance du résonateur (R) en déplaçant ou en dissolvant ou en faisant croître un *cluster* de matériau, et de
b) appliquer un signal de sondage au résonateur (R) et de déterminer une modification que le signal de sondage a ainsi subie.

11. Le procédé d'après la revendication 10, comprenant le fait de provoquer une diffusion du *cluster* de matériau dans un élément matrice du dispositif (1) par l'application du signal de réglage.

12. Le procédé d'après la revendication 10 ou 11, sachant que le *cluster* de matériau est constitué de N particules, sachant que N est un nombre entier avec N ≥ 1, notamment avec N ≤ 100, plus spécifiquement avec N ≤ 5, et sachant que la modification quantifiée de la fréquence de résonance dépend de N.

13. Le procédé d'après l'une des revendications de 10 à 12,
sachant que le signal de réglage est un signal lumineux, notamment un signal micro-onde ou un signal infrarouge ou un signal dans la partie visible du spectre électromagnétique ou un signal ultraviolet, ou
sachant que le signal de réglage est un signal de tension.

14. Le procédé d'après l'une quelconque des revendications de 10 à 13,
sachant que le signal de sondage est un signal lumineux, ou
sachant que le signal de sondage est un signal de tension.

15. Le procédé d'après l'une quelconque des revendications de 10 à 14, sachant que le dispositif (1) comprend une première électrode (11) et une deuxième électrode (12), sachant qu'en appliquant le signal de réglage, on modifie une conductivité électrique entre la première et la deuxième électrode, et sachant que notamment la modification de la conductivité électrique est quantifiée.
